# EUROPEAN PATENT APPLICATION

(11) **EP 4 614 755 A1**
(43) Date of publication of application: **10.09.2025**
(21) Application number: 23883885.8
(22) Date of filing: 20.09.2023
(51) Int. Cl.: H02J 3/46, H02J 3/00, H02J 3/32, H02J 3/38, H02J 7/34, H02J 7/35

(54) **POWER SYSTEM OPERATING METHOD, AND POWER SYSTEM CONTROL DEVICE**

(30) Priority: 02.11.2022 JP 2022176013
(71) Applicant: Panasonic Intellectual Property Management Co., Ltd., Kadoma-shi, Osaka 571-0057 (JP)
(72) Inventor: OKADA, Takashi, Kadoma-shi, Osaka 571-0057 (JP); SHIMIZU, Atsushi, Kadoma-shi, Osaka 571-0057 (JP); FUKUOKA, Masaru, Kadoma-shi, Osaka 571-0057 (JP); IGUCHI, Yusuke, Taito-ku, Tokyo 110-005 (JP)
(74) Representative: Grünecker Patent- und Rechtsanwälte PartG mbB
(86) International application number: PCT/JP2023/034121
(87) International publication number: WO 2024/095629

(57) **Abstract**

A method for operating a power system in the present disclosure includes the step of planning an output of a fuel cell system in such a way as to make up a difference between power demand and an output of a solar power generation system. **In** the step, if a charge level of a storage battery system is higher than or equal to an upper limit value smaller than 100%, first correction, in which the plan is corrected in such a way as to reduce the output of the fuel cell system, is performed and/or if the charge level of the storage battery system is lower than or equal to a lower limit value larger than 0%, second correction, in which the plan is corrected in such a way as to increase the output of the fuel cell system, is performed.

## Description

### Technical Field

The present disclosure relates to a method for operating a power system that supplies power and the like.

### Background Art

Power supply systems that supply power have been proposed (e.g., refer to PTL 1). Such a power supply system includes a power conditioner apparatus that adjusts power supplied from a solar power generation apparatus, which is a natural energy power generation apparatus, storage batteries, a hydrogen production apparatus, and fuel cells. The power supply system supplies power obtained by the solar power generation apparatus, the storage batteries, and the fuel cells to a facility and excess power to the storage batteries or the hydrogen production apparatus. The power supply system also predicts the amount of power that will be generated by the solar power generation apparatus and determines, on the basis of a prediction value, which indicates the predicted amount of power that will be generated, and the like, the amount of power to be stored in and discharged from the storage batteries, the amount of power to be supplied to the hydrogen production apparatus, and the amount of power to be supplied from the fuel cells. As a result, power that meets a demand of the facility can be continuously supplied.

### Citation List

### Patent Literature

PTL 1: International Publication No. 2017/013751

### Summary of Invention

### Technical Problem

In a method for operating the power supply system that includes the solar power generation apparatus, the storage batteries, and the fuel cells, that is, a power system, described in PTL 1, however, consideration for the amount of charge of the storage batteries is insufficient, and there is a problem in that there are possibilities that excessive power of the solar power generation apparatus cannot be absorbed by the storage batteries and reversely flows to a power grid and that power demand of a load cannot be met due to an insufficient amount of charge of the storage batteries and power needs to be purchased from the power grid.

The present disclosure, therefore, considers the amount of charge of storage batteries and provides a method for operating a power system and the like capable of reducing reverse power flow to a power grid and power purchased from the power grid. Solution to Problem

A method for operating a power system according to an aspect of the present disclosure includes the step of planning an output of a fuel cell system in such a way as to make up a difference between power demand and an output of a solar power generation system. In the step, if a charge level of a storage battery system is higher than or equal to an upper limit value smaller than 100%, first correction, in which the plan is corrected in such a way as to reduce the output of the fuel cell system, is performed and/or if the charge level of the storage battery system is lower than or equal to a lower limit value larger than 0%, second correction, in which the plan is corrected in such a way as to increase the output of the fuel cell system, is performed.

It should be noted that these general or specific aspects may be implemented as a system, a method, an integrated circuit, a computer program, a computer-readable storage medium such as a CD-ROM, or any selective combination thereof. The storage medium may be a non-transitory storage medium.

### Advantageous Effects of Invention

With the method for operating a power system in the present disclosure, the amount of charge of storage batteries is considered, and reverse power flow to a power grid and power purchased from the power grid can be reduced.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

[Fig. 1] Fig. 1 is a diagram illustrating an example of configuration of the entirety of a system including a power system and a control apparatus for the power system according to an embodiment.
[Fig. 2] Fig. 2 is a diagram illustrating an output of a fuel cell power generation apparatus planned by the control apparatus according to the embodiment.
[Fig. 3] Fig. 3 is a block diagram illustrating an example of functional configuration of the control apparatus according to the embodiment.
[Fig. 4] Fig. 4 is a diagram illustrating an example of generated power of the fuel cell power generation apparatus and charge/discharge power of a storage battery apparatus controlled by the control apparatus according to the embodiment.
[Fig. 5] Fig. 5 is a flowchart illustrating an example of processing operations performed by a data obtaining unit according to the embodiment.
[Fig. 6] Fig. 6 is a flowchart illustrating an example of processing operations performed by a fuel cell output calculation unit and an output correction unit according to the embodiment.
[Fig. 7] Fig. 7 is a flowchart illustrating an example of processing operations performed by a storage battery output calculation unit according to the embodiment.
[Fig. 8] Fig. 8 is a flowchart illustrating an example of processing operations performed by a third controller according to the embodiment.
[Fig. 9] Fig. 9 is a diagram illustrating an example of an effect produced by an operation mode of the control apparatus according to the embodiment.

### Description of Embodiments

The power supply system in PTL 1 is described to predict, on the basis of a next day's weather, the amount of power that will be generated by the solar power generation apparatus and adjust, on the basis of the prediction, the amount of power to be supplied from the solar power generation apparatus to the storage batteries and a water electrolysis apparatus during the daytime of the day and the amount of power to be supplied from the storage batteries and the fuel cells to the facility during the nighttime of the day.

More specifically, it is described that, in a case where the next day is expected to be sunny, power is to be supplied to the facility during the nighttime of the day while giving priority to the storage batteries over the fuel cells to secure available capacity of the storage batteries, and excessive power of the solar power generation apparatus is to be preferentially supplied to the storage batteries the next day. Generated power of a solar power generation apparatus and power demand, however, generally vary greatly, and even when it is sunny, the generated power of the solar power generation apparatus might be insufficient for the power demand, and power from storage batteries might be necessary. Even when the next day is expected to be sunny, therefore, it is necessary to start the next day with a certain amount of charge left in the storage batteries to be able to deal with such a case, but this is not considered.

It is also described that, in a case where the next day is expected to be rainy, power is to be supplied to the facility during the nighttime of the day while giving priority to the fuel cells over the storage batteries to secure a sufficient amount of charge of the storage batteries, and not only power from the solar power generation apparatus but also power from the storage batteries and the fuel cells is to be supplied to the facility the next day. Generated power of a solar power generation apparatus and power demand, however, generally vary greatly, and even when it rains, excessive power might be caused in the solar power generation apparatus, and storage batteries might need to store the excessive power. Even when the next day is expected to be rainy, therefore, it is necessary to start the next day with a certain amount of charge left in the storage batteries to be able to deal with such a case, but this is not considered.

A method for operating a power system according to an aspect of the present disclosure includes the step of planning an output of a fuel cell system in such a way as to make up a difference between power demand and an output of a solar power generation system, in which, in the step, if a charge level of a storage battery system is higher than or equal to an upper limit value smaller than 100%, first correction, in which the plan is corrected in such a way as to reduce the output of the fuel cell system, is performed and/or if the charge level of the storage battery system is lower than or equal to a lower limit value larger than 0%, second correction, in which the plan is corrected in such a way as to increase the output of the fuel cell system, is performed. The power system includes the solar power generation system, the fuel cell system, and the storage battery system. The solar power generation system includes a solar power generation apparatus, the fuel cell system includes fuel cells, and the storage battery system includes storage batteries. The power demand is, for example, power consumption of a load owned by a power consumer, and the outputs of the solar power generation system and the fuel cell system are, for example, generated power.

As a result, when the first correction is performed, the storage battery system can be discharged in such a way as to make up a shortfall in power caused with respect to the power demand due to a decrease in the output of the fuel cell system. Consequently, a possibility that the storage battery system enters a fully charged state and excess power of the solar power generation system reversely flows to a power grid, for example, is reduced. In addition, when the second correction is performed, power discharged from the storage battery system is reduced due to an increase in the output of the fuel cell system. Consequently, a possibility that the storage battery system enters a fully discharged state and power is purchased from the power grid, for example, is reduced. In addition, since the possibility that the storage battery system is fully charged or fully discharged is reduced, life of the storage batteries is likely to be extended.

When the storage battery system includes a plurality of storage battery units, the charge level of the storage battery system may be an average or a median of charge levels of the plurality of storage battery units. The power demand and the output of the solar power generation system may be actual values or predicted values. When the power demand and the output of the solar power generation system are actual values, the charge level of the storage battery system may be a charge level at a planning time of the output of the storage battery system. When the power demand and the output of the solar power generation system are predicted values, the charge level of the storage battery system, too, may be a predicted value.

A control apparatus for a power system according to another aspect of the present disclosure includes a memory storing power demand and an output of a solar power generation system, and a controller that plans an output of a fuel cell system in such a way as to make up the power demand and the output of the solar power generation system and that performs, if a charge level of a storage battery system is higher than or equal to an upper limit value smaller than 100%, first correction, in which the plan is corrected in such a way as to reduce the output of the fuel cell system, and/or performs, if the charge level of the storage battery system is lower than or equal to a lower limit value larger than 0%, second correction, in which the plan is corrected in such a way as to increase the output of the fuel battery system.

As a result, the same effects as those produced by the above-described method for operating a power system can be produced.

An embodiment will be specifically described hereinafter with reference to the drawings.

The embodiment that will be described hereinafter is a general or specific example. Values, shapes, materials, components, arrangement positions and connection modes of the components, steps, order of the steps, and the like mentioned in the following embodiment are examples, and not intended to limit the present disclosure. Among the components in the following embodiment, ones that are not described in the independent claims, which define broadest concepts, will be described as optional components.

The drawings are schematic diagrams, and not necessarily strict illustrations. In the drawings, the same components are given the same reference numerals.

### (Embodiment)

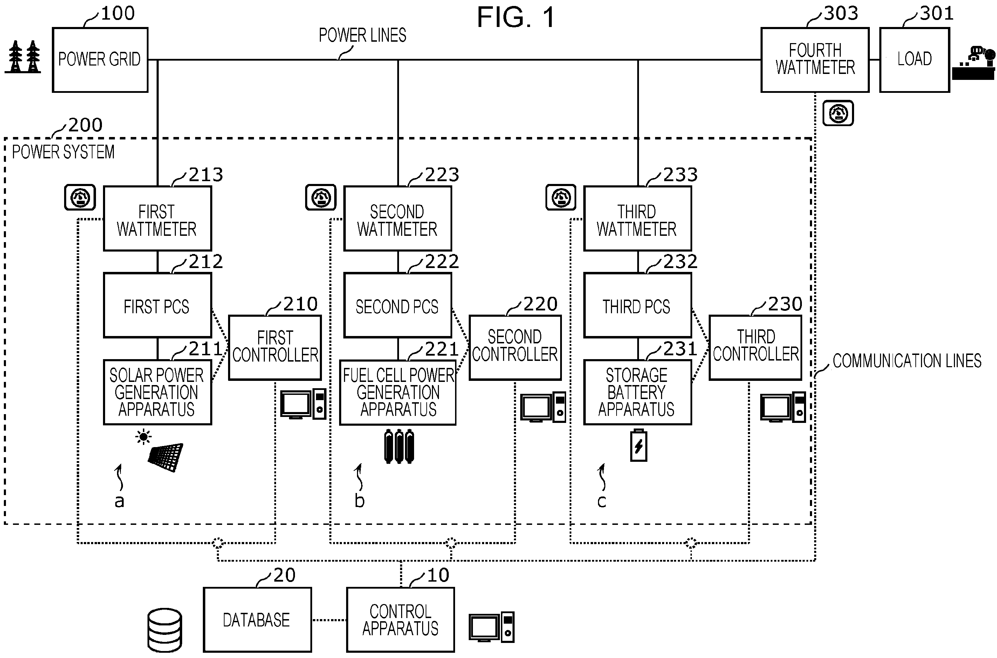

Fig. 1 is a diagram illustrating an example of configuration of the entirety of a system including a power system and a control apparatus for the power system according to the present embodiment. In Fig. 1, solid lines indicate power lines, and broken lines indicate communication lines.

A power system 200 according to the present embodiment is connected to a power grid 100 and a load 301 through the power lines. The power system 200 supplies power to the load 301. The power grid 100 has a function of supplying grid power and is connected to the load 301 through the power lines. The grid power is also called commercial power and is, for example, alternating power of 50 Hz or 60 Hz. When power supplied from the power system 200 is insufficient as power to be consumed by the load 301, therefore, the power grid 100 supplies power to the load 301 to make up the shortfall. When power supplied from the power system 200 exceeds power to be consumed by the load 301, on the other hand, the power grid 100 takes in the excess power, that is, the excess power is sold as reverse power flow. The load 301 according to the present embodiment is one or more appliances, apparatuses, devices, or the like that consume power. The power consumption of the load 301 will also be referred to as power demand. A power consumer such as a factory or a facility includes the load 301.

The power system 200 includes a solar power generation system a, a fuel cell system b, and a storage battery system c. The solar power generation system a includes a first controller 210, a solar power generation apparatus 211, a first PCS (power conditioning system) 212, and a first wattmeter 213.

The solar power generation apparatus 211 includes, for example, one or more solar power generation units, converts sunlight into power through photoelectric conversion, and outputs the power. The solar power generation units are, for example, solar power generation panels. The solar power generation apparatus 211 will also be simply referred to as solar cells hereinafter. The first PCS 212 converts power output from the solar power generation apparatus 211 into power of the same quality as grid power. The first wattmeter 213 measures power output from the solar power generation apparatus 211 through the first PCS 212, that is, grid power, and outputs a signal indicating the measured power to a control apparatus 10. The first controller 210 controls the solar power generation apparatus 211 and the first PCS 212. For example, the first controller 210 controls the solar power generation apparatus 211 and the first PCS 212 in accordance with a command from the control apparatus 10.

The fuel cell system b includes a second controller 220, a fuel cell power generation apparatus 221, a second PCS 222, and a second wattmeter 223.

The fuel cell power generation apparatus 221 includes, for example, one or more fuel cell units and generates power through a chemical reaction between hydrogen and oxygen. A hydrogen source used for the power generation is, for example, a hydrogen storage unit or a hydrogen infrastructure. The fuel cell units are, for example, a fuel cell stack device. The fuel cell power generation apparatus 221 will also be simply referred to as fuel cells. The second PCS 222 converts power output as a result of the power generation by the fuel cell power generation apparatus 221 into power of the same quality as grid power and outputs the power. The second wattmeter 223 measures power output from the fuel cell power generation apparatus 221 through the second PCS 222, that is, grid power, and outputs a signal indicating the measured power to the control apparatus 10. The second controller 220 controls the fuel cell power generation apparatus 221 and the second PCS 222. For example, the second controller 220 adjusts power output from the fuel cell power generation apparatus 221 and the second PCS 222 in accordance with a command from the control apparatus 10.

The storage battery system c includes a third controller 230, a storage battery apparatus 231, a third PCS 232, and a third wattmeter 233.

The storage battery apparatus 231 includes, for example, one or more storage battery units and stores or discharges power. The storage battery units are, for example, storage battery packs. The storage battery apparatus 231 will also be simply referred to as storage batteries. The third PCS 232 converts power output as a result of the discharge by the storage battery apparatus 231 into power of the same quality as grid power and outputs the power. Alternatively, the third PCS 232 converts grid power and charges the storage battery apparatus 231. The third wattmeter 233 measures power output from the storage battery apparatus 231 through the third PCS 232, that is, grid power, and outputs a signal indicating the measured power to the control apparatus 10. The third wattmeter 233 also measures power output from the solar power generation apparatus 211 or the fuel cell power generation apparatus 221 and stored in the storage battery apparatus 231 and outputs a signal indicating the measured power to the control apparatus 10. The third controller 230 controls the storage battery apparatus 231 and the third PCS 232. For example, the third controller 230 adjusts power discharged from the storage battery apparatus 231 or power stored in the storage battery apparatus 231 in accordance with a command from the control apparatus 10.

The control apparatus 10 according to the present embodiment is a control apparatus for the power system 200 and connected to a fourth wattmeter 303, the power system 200, and a database 20 through the communication lines. That is, the control apparatus 10 communicates with each of the fourth wattmeter 303, the power system 200, and the database 20 through the communication lines. In the present embodiment, power communicated, transmitted, specified, obtained, or received through the communication lines is not power itself but data indicating magnitude of power, that is, for example, wattage. The fourth wattmeter 303 measures power consumption of the load 301.

The control apparatus 10 receives, from each of the first wattmeter 213, the second wattmeter 223, the third wattmeter 233, and the fourth wattmeter 303 at a sampling cycle, a signal indicating power measured by the wattmeter. The control apparatus 10 then writes the power indicated by these signals to the database 20. Furthermore, the control apparatus 10 receives a signal indicating SOC (state of charge) of the storage battery apparatus 231 from the third controller 230 at the sampling cycle and writes the SOC to the database 20. A specific example of the sampling cycle is 30 seconds or 1 minute, but is not limited to these. In addition, the SOC of the storage battery apparatus 231 is a charge level of the storage battery apparatus 231, and will also be referred to as storage battery SOC hereinafter.

The database 20 is a storage medium for storing values of power, the storage battery SOC, and the like. The storage medium is a hard disk drive, a RAM (random-access memory), a ROM (read-only memory), a semiconductor memory, or the like. The storage medium may be volatile or nonvolatile. The database 20 is not included in the control apparatus 10 in the present embodiment, but may be included in the control apparatus 10, instead.

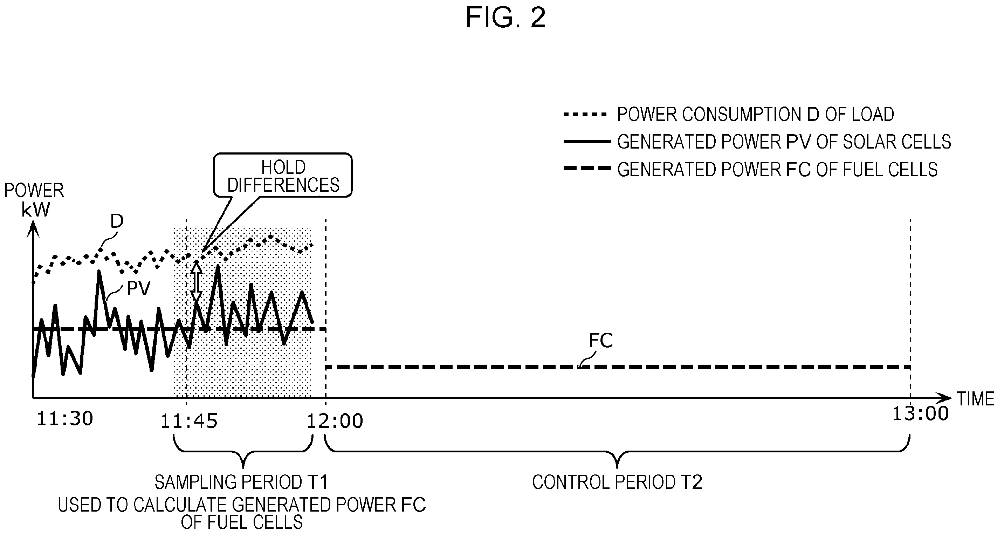

Fig. 2 is a diagram illustrating an output of the fuel cell power generation apparatus 221 planned by the control apparatus 10. More specifically, the graph of Fig. 2 schematically illustrates power at different times. A horizontal axis of the graph represents time, and a vertical axis represents power (kW).

As illustrated in the graph of Fig. 2, for example, the control apparatus 10 according to the present embodiment plans, at a planning time of "12:00", the output of the fuel cell power generation apparatus 221, that is, generated power FC of the fuel cell power generation apparatus 221, in a control period T2. The control period T2 will also be referred to as a second period. In a specific example, the control period T2 is one hour from the planning time "12:00" to a time "13:00".

More specifically, the control apparatus 10 reads, from the database 20, power consumption D of the load 301 and generated power PV of the solar power generation apparatus 211 in a sampling period T1 after the planning time. That is, the control apparatus 10 reads past power consumption D of the load 301 and past generated power PV of the solar power generation apparatus 211 obtained in the sampling period T1 at the sampling cycle. The control apparatus 10 then plans the generated power FC of the fuel cell power generation apparatus 221 in the control period T2 in such a way as to make up differences between the power consumption D of the load 301 and the generated power PV of the solar power generation apparatus 211 in the sampling period T1. The sampling period T1 will also be referred to as a first period. In a specific example, when the sampling cycle is 1 minute, the sampling period T1 corresponding to the control period T2 is 15 minutes from a time "11:44" to a time "11:59". In this case, 15 differences are obtained in the sampling period T1. When the sampling cycle is 30 seconds, the sampling period T1 corresponding to the control period T2 may be 15 minutes from a time "11:44:30" to a time "11:59:30". In this case, 30 differences are obtained in the sampling period T1.

The control apparatus 10 then controls the fuel cell power generation apparatus 221 and the second PCS 222 through the second controller 220 in such a way as to output the planned generated power FC of the fuel cell power generation apparatus 221 in the control period T2.

Furthermore, when the fuel cell power generation apparatus 221 is generating the planned generated power FC in the control period T2, the control apparatus 10 controls the storage battery apparatus 231 and the third PCS 232 through the third controller 230. More specifically, if the sum of the generated power PV of the solar power generation apparatus 211 and the generated power FC of the fuel cell power generation apparatus 221 is larger than the power consumption D of the load 301, the control apparatus 10 causes the storage battery apparatus 231 to store power. If the sum is smaller than the power consumption D, on the other hand, the control apparatus 10 causes the storage battery apparatus 231 to discharge power in such a way as to achieve the power consumption D.

The power consumption D of the load 301 is power measured by the fourth wattmeter 303. The generated power PV of the solar power generation apparatus 211 is power output from the solar power generation apparatus 211 through the first PCS 212 and measured by the first wattmeter 213. The generated power PV of the solar power generation apparatus 211 can be regarded as an output of the solar power generation system a or the solar power generation apparatus 211. Similarly, the generated power FC of the fuel cell power generation apparatus 221 is power output from the fuel cell power generation apparatus 221 through the second PCS 222 and measured by the second wattmeter 223. The generated power FC of the fuel cell power generation apparatus 221 can be regarded as an output of the fuel cell system b or the fuel cell power generation apparatus 221.

As described above, in the present embodiment, the first period, which is the sampling period T1, is a period immediately before the second period, which is the control period T2. The second period is longer than the first period, and the planned output of the fuel cell system b is constant throughout the second period. The output of the fuel cell system b corresponds to the generated power FC of the fuel cell power generation apparatus 221. Here, the period immediately before the second period is, in the present embodiment, a period from a start time to an end time, which will be described hereinafter. That is, the end time is, among measurement times of a plurality of values of power stored in the database 20, a latest measurement time relative to the above-described planning time. The start time is a time the sampling period T1, namely 15 minutes, for example, before the end time. The first period, which is the period immediately before the second period, however, is an example, and is not limited to that in the present embodiment. For example, the start time of the first period may be a time the second period before the planning time, which is a start time of the second period, or later. In other words, the first period may be any period before the start time of the second period and the second period or more before the start time of the second period. In addition, the first period is not limited to 15 minutes insofar as the first period is shorter than the second period, and may be, say, 30 minutes, instead. In other words, the first period may be a period half as long as the second period, or shorter.

In addition, as described above, in a method for operating the power system 200 performed by the control apparatus 10 according to the present embodiment, the output of the fuel cell power generation apparatus 221 in the control period T2 is planned on the basis of differences between actual values of the past power consumption D of the load 301 and actual values of the past generated power PV of the solar power generation apparatus 211. The fuel cell power generation apparatus 221 then makes an output in accordance with the plan. In the operation method according to the present embodiment, therefore, the output of the fuel cell power generation apparatus 221 takes priority over the output of the storage battery apparatus 231. The operation method according to the present embodiment, therefore, is also called a fuel cell priority application mode or a hydrogen priority application mode. This is because the fuel cell power generation apparatus 221 can secure a larger output capacity than the storage battery apparatus 231 when the hydrogen source of the fuel cell power generation apparatus 221 is, for example, a hydrogen storage unit or a hydrogen infrastructure.

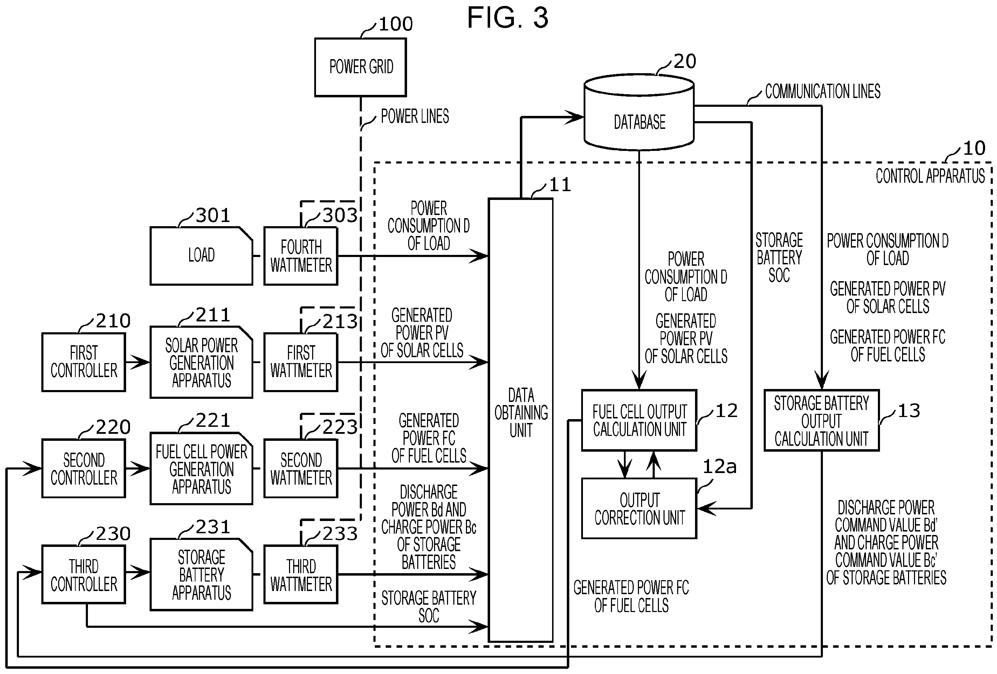

Fig. 3 is a block diagram illustrating an example of functional configuration of the control apparatus 10. In Fig. 3, the first PCS 212, the second PCS 222, and the third PCS 232 are omitted to simplify description. In Fig. 3, solid lines indicate communication lines and broken lines indicate power lines to make communication relationships between the components easier to understand.

The control apparatus 10 according to the present embodiment includes a data obtaining unit 11, a fuel cell output calculation unit 12, an output correction unit 12a, and a storage battery output calculation unit 13.

The data obtaining unit 11 obtains, at the above-described sampling cycle, signals indicating four values of power from the fourth wattmeter 303, the first wattmeter 213, the second wattmeter 223, and the third wattmeter 233. The data obtaining unit 11 writes the four values of power to the database 20 as actual values. The four values of power are the power consumption D of the load 301, the generated power PV of the solar power generation apparatus 211, the generated power FC of the fuel cell power generation apparatus 221, and discharge power Bd or charge power Bc of the storage battery apparatus 231. The discharge power Bd and the charge power Bc will be collectively referred to as charge/discharge power SB. Furthermore, the data obtaining unit 11 obtains the signal indicating the storage battery SOC from the third controller 230 at the sampling cycle along with the above-described signals indicating the four values of power. The data obtaining unit 11 then writes the storage battery SOC to the database 20 as an actual value.

The discharge power Bd of the storage battery apparatus 231 according to the present embodiment is power discharged from the storage battery apparatus 231 through the third PCS 232 and measured by the third wattmeter 233. Similarly, the charge power Bc of the storage battery apparatus 231 according to the present embodiment is power stored in the storage battery apparatus 231 from the solar power generation apparatus 211 or the fuel cell power generation apparatus 221 through the third PCS 232 and measured by the third wattmeter 233.

The fuel cell output calculation unit 12 reads, from the database 20, the power consumption D of the load 301 and the generated power PV of the solar power generation apparatus 211 in the sampling period T1 closest to a planning time. The fuel cell output calculation unit 12 then calculates the generated power FC of the fuel cell power generation apparatus 221 in the control period T2 using the power consumption D and the generated power PV. The generated power FC is thus planned. That is, the fuel cell output calculation unit 12 according to the present embodiment plans the output of the fuel cell system b in such a way as to make up a difference between the power demand and the output of the solar power generation system a. More specifically, the fuel cell output calculation unit 12 plans the output of the fuel cell system b, that is, the generated power FC, in the second period, which is the control period T2, later than the first period, which is the sampling period T1, in such a way as to make up differences between actual values of the power demand and actual values of the output of the solar power generation system a in the first period. The output of the solar power generation system a corresponds to the generated power PV of the solar power generation apparatus 211.

The output correction unit 12a reads latest storage battery SOC at a planning time from the database 20. The output correction unit 12a then corrects, on the basis of the storage battery SOC, the generated power FC planned by the fuel cell output calculation unit 12. That is, the output correction unit 12a performs at least one of first correction or second correction. In the first correction, the output correction unit 12a corrects the plan in such a way as to reduce the output of the fuel cell system b if the storage battery SOC is higher than or equal to an upper limit value smaller than 100%. In the second correction, the output correction unit 12a corrects the plan in such a way as to increase the output of the fuel cell system b if the storage battery SOC is lower than a lower limit value larger than 0%.

The fuel cell output calculation unit 12 commands, through the communication line, the second controller 220 to generate the generated power FC. The generated power FC is, when the first correction or the second correction has been performed, the generated power FC after the correction, and, when neither the first correction nor the second correction has been performed, the generated power FC planned or calculated by the fuel cell output calculation unit 12. The second controller 220 controls the fuel cell power generation apparatus 221 and the second PCS 222 in accordance with the command from the fuel cell output calculation unit 12.

While the fuel cell power generation apparatus 221 is generating the generated power FC planned in the above-described control period T2, the storage battery output calculation unit 13 reads latest three values of power from the database 20 at a storage battery command cycle. The three values of power are the power consumption D of the load 301, the generated power PV of the solar power generation apparatus 211, and the generated power FC of the fuel cell power generation apparatus 221. A specific example of the storage battery command cycle is 1 minute. The storage battery output calculation unit 13 then calculates power to be discharged by or stored in the storage battery apparatus 231 on the basis of the three read values of power. The storage battery output calculation unit 13 specifies, through the communication lines, the calculated power for the third controller 230. That is, the storage battery output calculation unit 13 outputs a discharge power command value Bd' or a charge power command value Bc' indicating the calculated power to the third controller 230. The third controller 230 controls the storage battery apparatus 231 and the third PCS 232 in accordance with the command from the storage battery output calculation unit 13.

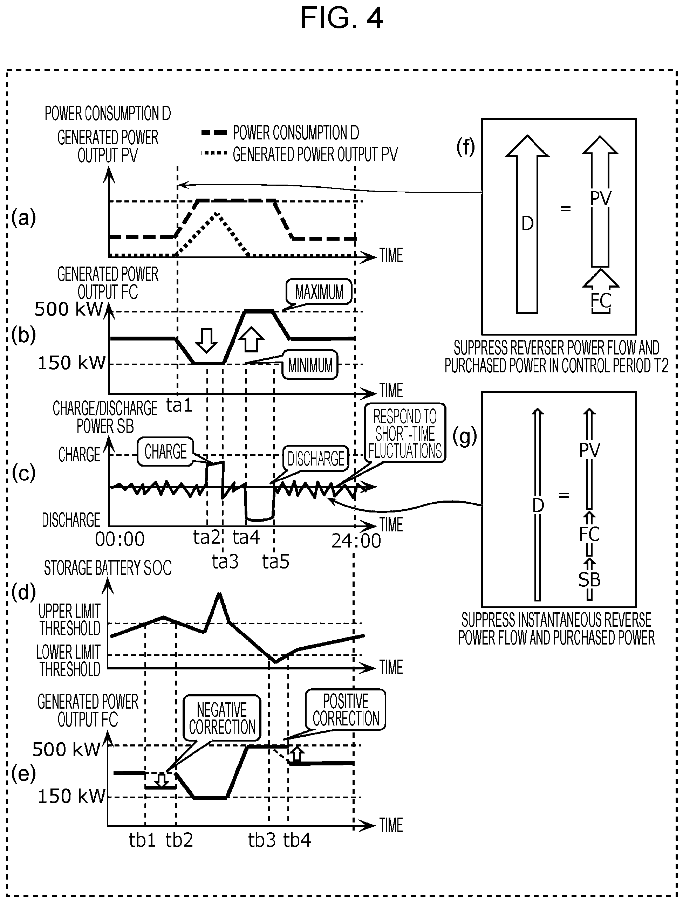

Fig. 4 is a diagram illustrating an example of the generated power FC of the fuel cell power generation apparatus 221 and the charge/discharge power SB of the storage battery apparatus 231 controlled by the control apparatus 10. Fig. 4(a) is a graph schematically illustrating temporal changes in the power consumption D of the load 301 and the generated power PV of the solar power generation apparatus 211. Fig. 4(b) is a graph schematically illustrating temporal changes in the generated power FC of the fuel cell power generation apparatus 221 in a case where the output correction unit 12a does not perform correction. Fig. 4(c) is a graph schematically illustrating temporal changes in the charge/discharge power SB of the storage battery apparatus 231. Fig. 4(d) is a graph schematically illustrating temporal changes in the storage battery SOC. Fig. 4(e) is a graph schematically illustrating temporal changes in the generated power FC of the fuel cell power generation apparatus 221 in a case where the output correction unit 12a corrects a plan. Horizontal axes of these graphs represent time, and vertical axes represent power.

As illustrated in Fig. 4(a), for example, the power consumption D of the load 301 and the generated power PV of the solar power generation apparatus 211 vary from a time "00:00" to a time "24:00". Here, at a time ta1, which is a planning time, the fuel cell output calculation unit 12 of the control apparatus 10 plans the generated power FC of the fuel cell power generation apparatus 221 in the control period T2 after the time ta1. At this time, as illustrated in Fig. 4(f), the fuel cell output calculation unit 12 calculates the generated power FC such that the power consumption D of the load 301 in the sampling period T1 becomes equal to the sum of the generated power PV of the solar power generation apparatus 211 and the generated power FC of the fuel cell power generation apparatus 221. The calculated generated power FC is planned as the generated power FC of the fuel cell power generation apparatus 221 in the control period T2 after the time ta1. As a result, reverse power flow and purchased power, that is, an excess and a shortfall in power, in the control period T2 can be suppressed.

The fuel cell output calculation unit 12 repeatedly calculates the generated power FC at a cycle of the control period T2. Here, if the calculated generated power FC is not corrected, the second controller 220 controls, as illustrated in Fig. 4(b), the fuel cell power generation apparatus 221 in such a way as to generate the generated power FC before correction. Here, the fuel cell power generation apparatus 221 has a rated output and a minimum output. For example, the rated output is 500 kW, and the minimum output is 150 kW. If the generated power FC specified by the fuel cell output calculation unit 12 exceeds the rated output, therefore, the second controller 220 may cause the fuel cell power generation apparatus 221 to generate power of the rated output. If the generated power FC specified by the fuel cell output calculation unit 12 falls below the minimum output, the second controller 220 may cause the fuel cell power generation apparatus 221 to generate power of the minimum output.

The storage battery output calculation unit 13 calculates the charge/discharge power SB of the storage battery apparatus 231 at the storage battery command cycle. At this time, as illustrated in Fig. 4(g), the storage battery output calculation unit 13 calculates the charge/discharge power SB such that the sum of the latest generated power PV of the solar power generation apparatus 211, the latest generated power FC of the fuel cell power generation apparatus 221, and the charge/discharge power SB of the storage battery apparatus 231 becomes equal to the latest power consumption D of the load 301. Furthermore, the storage battery output calculation unit 13 commands the third controller 230 to discharge or store the charge/discharge power SB. That is, the storage battery output calculation unit 13 outputs the discharge power command value Bd' or the charge power command value Bc' to the third controller 230. As a result, as illustrated in Fig. 4(c), the third controller 230 controls the storage battery apparatus 231 in such a way as to discharge or store the charge/discharge power SB.

That is, if the sum of the output of the solar power generation system a and the output of the fuel cell system b is larger than the power demand while the fuel cell system b is generating power in the second period, which is the control period T2, with a planned output, the storage battery output calculation unit 13 according to the present embodiment causes the storage battery system c to store power. If the sum of the output of the solar power generation system a and the output of the fuel cell system b is smaller than the power demand while the fuel cell system b is generating power in the second period, which is the control period T2, with a planned output, on the other hand, the storage battery output calculation unit 13 causes the storage battery system c to discharge power in such a way as to meet the power demand. The storing and discharge by the storage battery system c correspond to the storing and discharge by the storage battery apparatus 231.

In a period from a time ta2 to a time ta3 in Fig. 4, the generated power FC of the fuel cell power generation apparatus 221 cannot be set smaller than the minimum output although the generated power PV of the solar power generation apparatus 211 is large. An excess in the generated power PV, therefore, is stored in the storage battery apparatus 231 as large charge power Bc. In a period from a time ta4 to a time ta5, on the other hand, the generated power FC of the fuel cell power generation apparatus 221 cannot be set larger than the rated output although the generated power PV of the solar power generation apparatus 211 is small. A shortfall in the generated power PV or the generated power FC, therefore, is discharged from the storage battery apparatus 231 as large discharge power Bd.

Here, in the present embodiment, the output correction unit 12a corrects the generated power FC of the fuel cell power generation apparatus 221 planned by the fuel cell output calculation unit 12 in accordance with the storage battery SOC. The second controller 220 then controls the fuel cell power generation apparatus 221 in such a way as to generate the corrected generated power FC.

More specifically, as illustrated in Figs. 4(d) and 4(e), when the storage battery SOC is higher than or equal to an upper limit threshold from a time tb1 to a time tb2, the output correction unit 12a corrects the generated power FC planned by the fuel cell output calculation unit 12 in such a way as to reduce the generated power FC of the fuel cell power generation apparatus 221. That is, the output correction unit 12a performs the first correction. The first correction is also called negative correction. The upper limit threshold is an upper limit value of the storage battery SOC smaller than 100%. As a result, as illustrated in Fig. 4(e), the second controller 220 controls the fuel cell power generation apparatus 221 from the time tb1 to the time tb2 in such a way as to generate the corrected generated power FC.

When the storage battery SOC is lower than a lower limit threshold from a time tb3 to a time tb4, on the other hand, the output correction unit 12a corrects the generated power FC planned by the fuel cell output calculation unit 12 in such a way as to increase the generated power FC of the fuel cell power generation apparatus 221. That is, the output correction unit 12a performs the second correction. The second correction is also called positive correction. The lower limit threshold is a lower limit value of the storage battery SOC larger than 0%. As a result, as illustrated in Fig. 4(e), the second controller 220 controls the fuel cell power generation apparatus 221 from the time tb3 to the time tb4 in such a way as to generate the corrected generated power FC. At this time, too, the generated power FC of the fuel cell power generation apparatus 221 is kept lower than or equal to the rated output.

The control apparatus 10 according to the present embodiment can be regarded as an apparatus including a memory and a controller. The memory is a storage medium storing the power consumption D of the load 301 and the generated power PV of the solar power generation apparatus 211 read by the fuel cell output calculation unit 12. The storage medium is a hard disk drive, a RAM, a ROM, a semiconductor memory, or the like. The storage medium may be volatile or nonvolatile. That is, the memory stores the power demand and the output of the solar power generation system a. The controller has the functions of the fuel cell output calculation unit 12 and the output correction unit 12a. That is, the controller functions as the fuel cell output calculation unit 12 and the output correction unit 12a to plan the output of the fuel cell system b in such a way as to make up the above-described differences. When planning the output, the controller performs at least one of the first correction or the second correction. In the first correction, when a charge level of the storage battery system c is higher than or equal to the upper limit value smaller than 100%, the controller corrects the plan in such a way as to reduce the output of the fuel cell system b. In the second correction, when the charge level of the storage battery system c is lower than or equal to the lower limit value larger than 0%, the controller corrects the plan in such a way as to increase the output of the fuel cell system b.

The control apparatus 10 according to the present embodiment may include the database 20 as described above. In this case, the memory may be used as the database 20.

The components of the control apparatus 10 including the data obtaining unit 11 and the controller may be implemented as dedicated hardware or circuits. Each component may be achieved by executing a software program. That is, each component may be achieved by reading and executing a software program stored in a storage medium, such as a hard disk or a semiconductor memory, using a program execution unit, such as a CPU (central processing unit) or a processor. The control apparatus 10 may be implemented as an independent controller that performs centralized control or a plurality of controllers that performs distributed control in a cooperative manner.

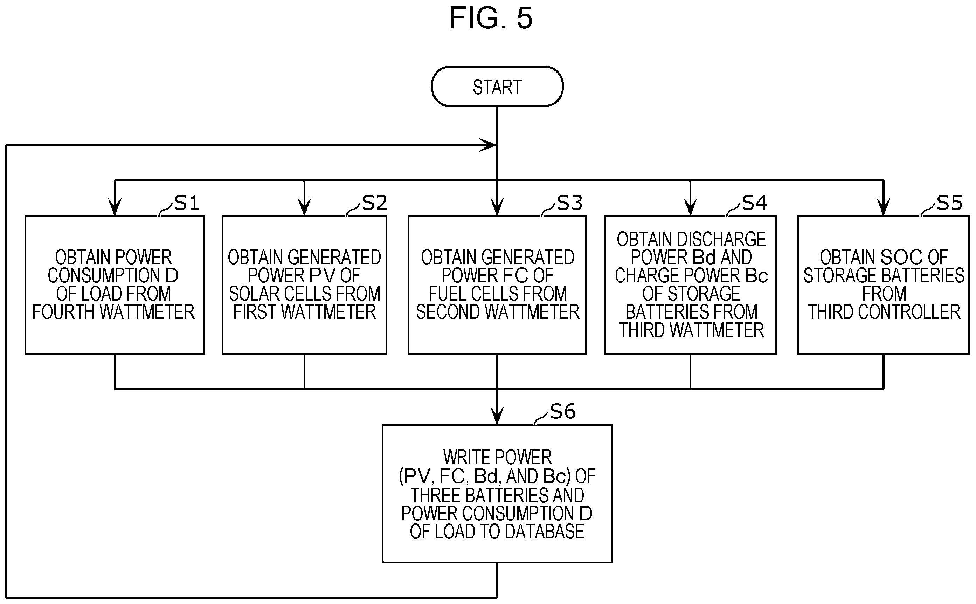

Fig. 5 is a flowchart illustrating an example of processing operations performed by the data obtaining unit 11.

The data obtaining unit 11 performs processing in steps S1 to S6 at the sampling cycle. That is, the data obtaining unit 11 obtains a signal indicating the power consumption D of the load 301 from the fourth wattmeter 303 (step S1). The data obtaining unit 11 also obtains a signal indicating the generated power PV of the solar power generation apparatus 211 from the first wattmeter 213 (step S2). The data obtaining unit 11 also obtains a signal indicating the generated power FC of the fuel cell power generation apparatus 221 from the second wattmeter 223 (step S3). The data obtaining unit 11 also obtains a signal indicating the discharge power Bd or the charge power Bc of the storage battery apparatus 231 from the third wattmeter 233 (step S4). The data obtaining unit 11 also obtains a signal indicating the storage battery SOC from the third controller 230 (step S5).

Next, the data obtaining unit 11 writes the power consumption D of the load 301 indicated by the signal obtained in step S1, the values of power of the three batteries indicated by the signals obtained in steps S2 to S4, and the storage battery SOC indicated by the signal obtained in step S5 to the database 20 (step S6). The values of power of the three batteries are the generated power PV of the solar power generation apparatus 211, the generated power FC of the fuel cell power generation apparatus 221, and the discharge power Bd or the charge power Bc of the storage battery apparatus 231.

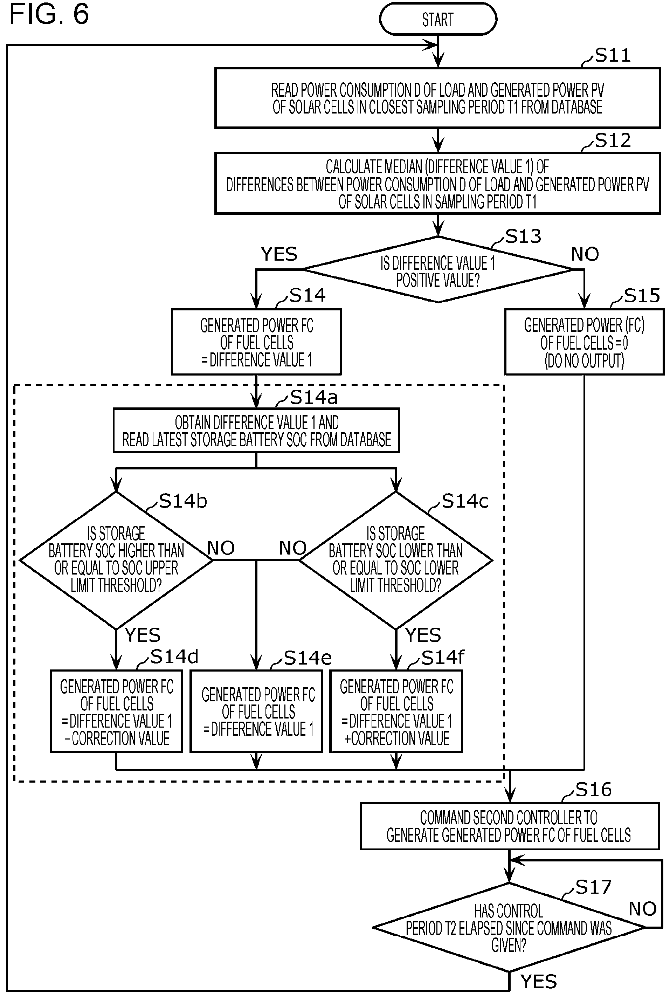

Fig. 6 is a flowchart illustrating an example of processing operations performed by the fuel cell output calculation unit 12 and the output correction unit 12a.

The fuel cell output calculation unit 12 reads, from the database 20, the power consumption D of the load 301 and the generated power PV of the solar power generation apparatus 211 at each of a plurality of measurement times in a sampling period T1 closest to a planning time (step S11).

Next, the fuel cell output calculation unit 12 calculates a difference between the power consumption D of the load 301 and the generated power PV of the solar power generation apparatus 211 at each of the plurality of measurement times. That is, the fuel cell output calculation unit 12 calculates the difference at each of the plurality of measurement times by subtracting the generated power PV at the measurement time from the power consumption D at the measurement time. The fuel cell output calculation unit 12 then calculates a median of the differences at the plurality of measurement times as difference value 1 (step S12). In the present embodiment, the median of the differences at the plurality of measurement times is an example of difference value 1, and difference value 1 may be an average of the differences, instead.

That is, the fuel cell output calculation unit 12 according to the present embodiment plans the output of the fuel cell system b in the second period such that the output of the fuel cell system b becomes a median of differences between actual values of the power demand and actual values of the output of the solar power generation system a in the first period. Alternatively, the fuel cell output calculation unit 12 plans the output of the fuel cell system b in the second period such that the output of the fuel cell system b becomes an average of differences between actual values of the power demand and actual values of the output of the solar power generation system a in the first period.

The fuel cell output calculation unit 12 then determines whether difference value 1 is a positive value (step S13). Here, if determining that difference value 1 is a positive value (YES in step S13), the fuel cell output calculation unit 12 sets the generated power FC of the fuel cell power generation apparatus 221 at difference value 1 (step S14). If determining that difference value 1 is not a positive value (NO in step S13), on the other hand, the fuel cell output calculation unit 12 sets the generated power FC of the fuel cell power generation apparatus 221 at 0 (step S15). That is, if difference value 1 is not a positive value, the generated power PV of the solar power generation apparatus 211 is larger than or equal to the power consumption D of the load 301, and power supplied to the load 301 is not insufficient. The generated power FC of the fuel cell power generation apparatus 221, therefore, is set at 0. In other words, the generated power FC is set such that the fuel cell power generation apparatus 221 does not output power.

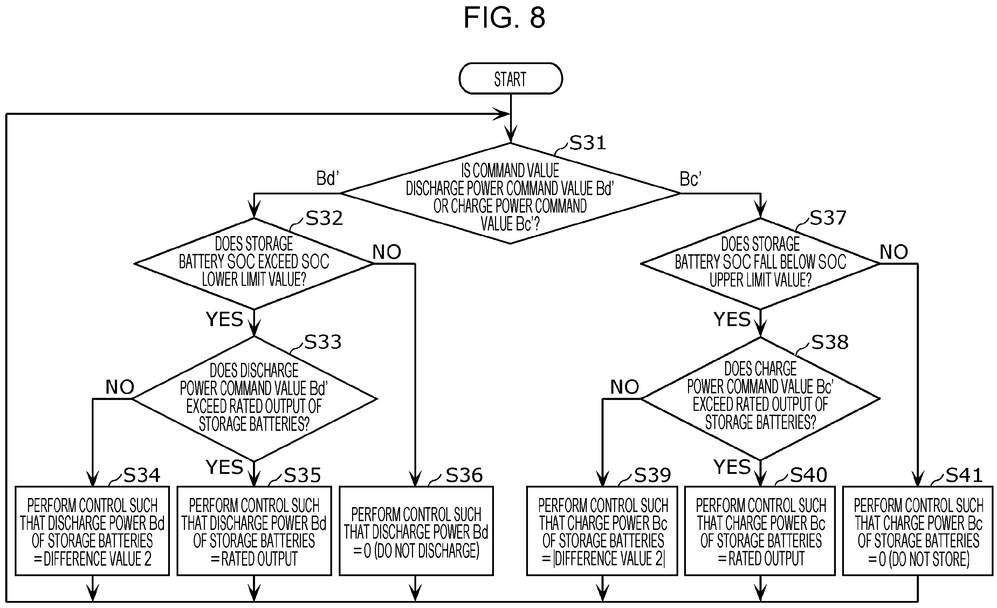

Here, in the present embodiment, the output correction unit 12a corrects the generated power FC set in step S14 on the basis of the storage battery SOC. That is, the output correction unit 12a corrects the plan of the output of the fuel cell power generation apparatus 221. More specifically, the output correction unit 12a obtains a signal indicating the generated power FC set as difference value 1 and also reads latest storage battery SOC from the database 20 (step S14a). The output correction unit 12a then determines whether or not the storage battery SOC is higher than or equal to an SOC upper limit threshold (step S14b). The output correction unit 12a also determines whether or not the storage battery SOC is lower than or equal to an SOC lower limit threshold (step S14c). The SOC upper limit threshold may be the same as or different from an SOC upper limit value illustrated in Fig. 8, which will be described later. Similarly, the SOC lower limit threshold may be the same as or different from an SOC lower limit value illustrated in Fig. 8, which will be described later.

If determining in step S14b that the storage battery SOC is higher than or equal to the SOC upper limit threshold (YES in step S14b), the output correction unit 12a sets the generated power FC of the fuel cell power generation apparatus 221 as "difference value 1 - correction value" (step S14d). That is, the above-described first correction, which is negative correction, is performed on the plan. If determining that the storage battery SOC is not higher than or equal to the SOC upper limit threshold (NO in step S14b), on the other hand, the output correction unit 12a sets the generated power FC of the fuel cell power generation apparatus 221 as difference value 1 (step S14e).

If determining in step S14c that the storage battery SOC is lower than or equal to the SOC lower limit threshold (YES in step S14c), the output correction unit 12a sets the generated power FC of the fuel cell power generation apparatus 221 as "difference value 1 + correction value" (step S14f). That is, the above-described second correction, which is positive correction, is performed on plan. If determining that the storage battery SOC is not lower than or equal to the SOC lower limit threshold (NO in step S14c), on the other hand, the output correction unit 12a sets the generated power FC of the fuel cell power generation apparatus 221 as difference value 1 (step S14e). As a result of steps S14a to S14f, the generated power FC of the fuel cell power generation apparatus 221 planned by the fuel cell output calculation unit 12 is corrected.

When the storage battery apparatus 231 includes a plurality of storage battery units, the storage battery SOC may be an average or a median of SOCs of the plurality of storage battery units.

The fuel cell output calculation unit 12 commands the second controller 220 to generate the generated power FC set in step S14d, S14e, S14f, or S15 (step S16). Upon receiving the command, the second controller 220 controls the fuel cell power generation apparatus 221 and the second PCS 222. As a result, the fuel cell power generation apparatus 221 outputs the generated power FC set in step S14d, S14e, S14f, or S15 through the second PCS 222.

The fuel cell output calculation unit 12 then determines whether the control period T2 has elapsed since the command was given in step S16 (step S17). Here, if determining that the control period T2 has not elapsed (NO in step S17), the fuel cell output calculation unit 12 performs the processing in step S17 again. If determining that the control period T2 has elapsed (YES in step S17), on the other hand, the fuel cell output calculation unit 12 performs the processing in step S11 again. As a result, the processing in steps S11 to S17 is performed in every control period T2.

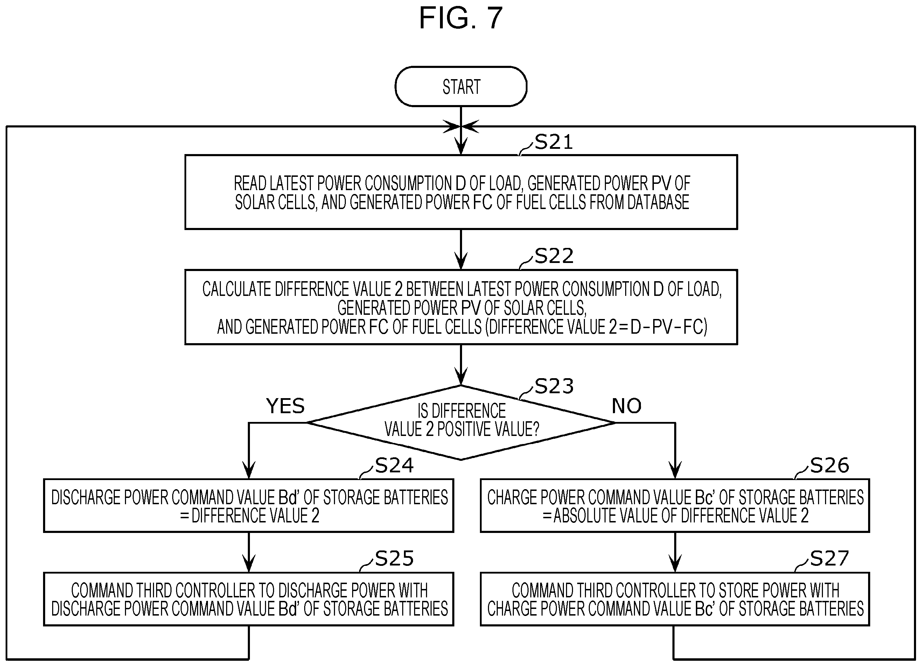

Fig. 7 is a flowchart illustrating an example of processing operations performed by the storage battery output calculation unit 13.

The storage battery output calculation unit 13 performs the processing in steps S21 to S27 at the storage battery command cycle. More specifically, the storage battery output calculation unit 13 reads latest three values of power from the database 20 (step S21). The three values of power are the power consumption D of the load 301, the generated power PV of the solar power generation apparatus 211, and the generated power FC of the fuel cell power generation apparatus 221. The storage battery output calculation unit 13 calculates a difference between the read power consumption D of the load 301, the generated power PV of the solar power generation apparatus 211, and the generated power FC of the fuel cell power generation apparatus 221 as difference value 2 (step S22). That is, the storage battery output calculation unit 13 calculates difference value 2 as "difference value 2 = D - PV - FC", that is, by subtracting the generated power PV and the generated power FC from the power consumption D.

Next, the storage battery output calculation unit 13 determines whether difference value 2 is a positive value (step S23). Here, if determining that difference value 2 is a positive value (YES in step S23), the storage battery output calculation unit 13 sets the discharge power command value Bd' of the storage battery apparatus 231 at difference value 2 (step S24). The storage battery output calculation unit 13 commands the third controller 230 to discharge power with the discharge power command value Bd' (step S25).

If determining that difference value 2 is not a positive value (NO in step S23), on the other hand, the storage battery output calculation unit 13 sets the charge power command value Bc' of the storage battery apparatus 231 at an absolute value of difference value 2 (step S26). The storage battery output calculation unit 13 then commands the third controller 230 to store power with the charge power command value Bc' (step S27).

Fig. 8 is a flowchart illustrating an example of processing operations performed by the third controller 230. More specifically, the flowchart of Fig. 8 illustrates an example of processing operations performed by the third controller 230 after the command in step S25 or S27 in the flowchart of Fig. 7 is given.

Upon receiving the command from the storage battery output calculation unit 13, the third controller 230 determines whether the command, that is, the command value, is the discharge power command value Bd' or the charge power command value Bc' (step S31). If determining that the command value is the discharge power command value Bd' (Bd' in step S31), the third controller 230 determines whether SOC exceeds an SOC lower limit value (step S32). The SOC lower limit value is a predetermined value and, for example, stored in the third controller 230. The storage battery SOC exceeding the SOC lower limit value means that the storage battery SOC is higher than the SOC lower limit value. That is, in step S32, whether the storage battery SOC is higher than the SOC lower limit value is determined.

If determining that the storage battery SOC exceeds the SOC lower limit value (YES in step S32), the third controller 230 determines whether the discharge power command value Bd' exceeds a rated output of the storage battery apparatus 231 (step S33). Here, if determining that the discharge power command value Bd' does not exceed the rated output (NO in step S33), the third controller 230 controls the storage battery apparatus 231 and the third PCS 232 such that the discharge power Bd of the storage battery apparatus 231 becomes difference value 2 (step S34). The discharge power Bd of the storage battery apparatus 231 is power discharged from the storage battery apparatus 231 through the third PCS 232. That is, the storage battery apparatus 231 discharges power through the third PCS 232 with difference value 2.

If determining that the discharge power command value Bd' exceeds the rated output (YES in step S33), on the other hand, the third controller 230 controls the storage battery apparatus 231 and the third PCS 232 such that the discharge power Bd of the storage battery apparatus 231 becomes the rated output (step S35). That is, the storage battery apparatus 231 discharges power through the third PCS 232 with the rated output. If determining that the storage battery SOC does not exceed the SOC lower limit value (NO in step S32), the third controller 230 controls the storage battery apparatus 231 and the third PCS 232 such that the discharge power Bd of the storage battery apparatus 231 becomes zero (step S36). That is, the storage battery apparatus 231 does not discharge power.

If determining in step S31 that the command value is the charge power command value Bc' (Bc' in step S31), the third controller 230 determines whether the storage battery SOC falls below an SOC upper limit value (step S37). The SOC upper limit value is a predetermined value and, for example, stored in the third controller 230. The storage battery SOC falling below the SOC upper limit value means that the storage battery SOC is lower than the SOC upper limit value. That is, in step S37, whether the storage battery SOC is lower than the SOC upper limit value is determined.

If determining that the storage battery SOC is lower than the SOC upper limit value (YES in step S37), the third controller 230 determines whether the charge power command value Bc' exceeds the rated output of the storage battery apparatus 231 (step S38). Here, if determining that the charge power command value Bc' does not exceed the rated output (NO in step S38), the third controller 230 controls the storage battery apparatus 231 and the third PCS 232 such that the charge power Bc of the storage battery apparatus 231 becomes an absolute value of difference value 2 (step S39). The charge power Bc of the storage battery apparatus 231 is power stored in the storage battery apparatus 231 through the third PCS 232. That is, the storage battery apparatus 231 stores power with the absolute value of difference value 2.

If determining that the charge power command value Bc' exceeds the rated output (YES in step S38), on the other hand, the third controller 230 controls the storage battery apparatus 231 and the third PCS 232 such that the charge power Bc of the storage battery apparatus 231 becomes the rated output (step S40). That is, the storage battery apparatus 231 stores power with the rated output. If determining that the storage battery SOC does not fall below the SOC upper limit value (NO in step S37), the third controller 230 controls the storage battery apparatus 231 and the third PCS 232 such that the charge power Bc of the storage battery apparatus 231 becomes zero (step S41). That is, the storage battery apparatus 231 does not store power.

When the storage battery apparatus 231 includes a plurality of storage battery units, the third controller 230 may perform the steps included in the flowchart of Fig. 8 for each of the storage battery units. In this case, a discharge power command value Bd' and a charge power command value Bc' used for each storage battery unit may be values obtained by dividing command values for the entirety of the storage battery apparatus 231 by the number of storage battery units included in the storage battery apparatus 231.

In the present embodiment, the third controller 230 has a function of controlling the discharge power Bd and the charge power Bc of the storage battery apparatus 231 on the basis of the charge power command value Bc' and the discharge power command value Bd'. The storage battery output calculation unit 13 of the control apparatus 10, however, may also have the function, instead. That is, the storage battery output calculation unit 13 may perform the steps included in the flowchart of Fig. 8. In this case, the storage space 13 then reads, in step S21 in Fig. 7, latest storage battery SOC from the database 20 and uses the read storage battery SOC in steps S32 and S37 in Fig. 8. The third controller 230, on the other hand, controls the storage battery apparatus 231 and the third PCS 232 in accordance with the discharge power Bd and the charge power Bc determined in the processing in steps S34 to S36 and S39 to S41 performed by the storage battery output calculation unit 13.

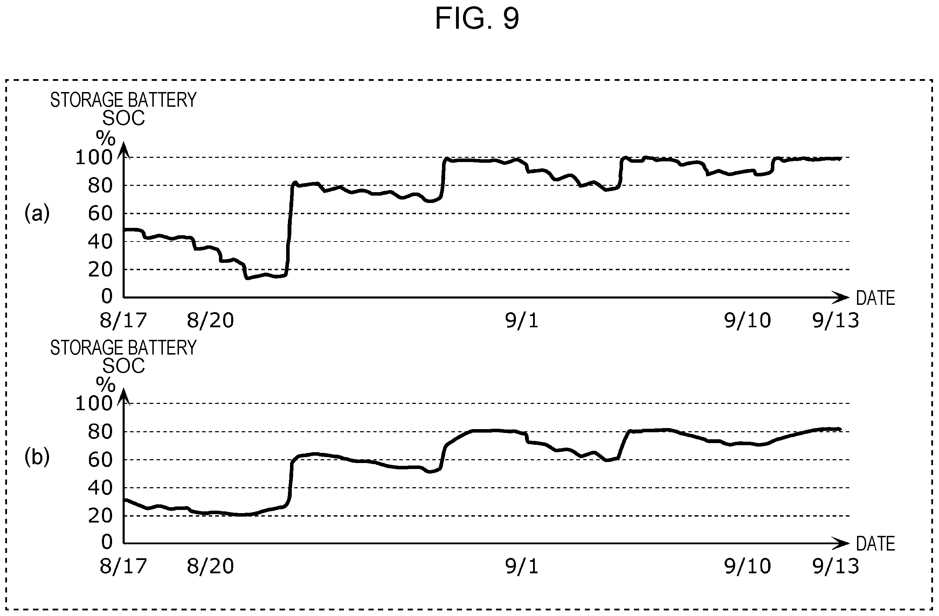

Fig. 9 is a diagram illustrating an example of an effect produced by an operation mode of the control apparatus 10 according to the present embodiment. In Fig. 9, the effect produced by the operation mode of the control apparatus 10 is compared with that produced by an operation mode in a comparative example. More specifically, Fig. 9(a) is a graph illustrating temporal changes in storage battery SOC obtained in the operation mode in the comparative example, and Fig. 9(b) is a graph illustrating temporal changes in storage battery SOC obtained in the operation mode of the control apparatus 10 according to the present embodiment. A vertical axis of each graph represents the storage battery SOC, and a horizontal axis represents dates.

In the operation mode in the comparative example, the generated power FC of the fuel cell power generation apparatus 221 planned by the fuel cell output calculation unit 12 is not corrected. That is, the second controller 220 is notified of the generated power FC set as difference value 1 in step S14 in Fig. 6 regardless of the storage battery SOC.

In the operation mode in the comparative example, the storage battery SOC tends to be maintained close to 100% from an end of August as illustrated in Fig. 9(a).

In the operation mode of the control apparatus 10 according to the present embodiment, on the other hand, the storage battery SOC is kept lower than or equal to approximately 80% even after the end of August as illustrated in Fig. 9(b). The storage battery SOC is maintained higher than or equal to approximately 20%.

In the power system 200 to which each operation mode is applied, the solar power generation apparatus 211 includes 1,800 solar power generation panels, and a maximum output of the entirety of the solar power generation apparatus 211 is 500 kW. The fuel cell power generation apparatus 221 includes 100 hydrogen fuel cells, and a maximum output or a rated output of the entirety of the fuel cell power generation apparatus 221 is 500 kW. The hydrogen fuel cells are also called fuel cell stack devices. A control range of the fuel cell power generation apparatus 221 is a range of the rated output to 0 kW. A maximum output of each hydrogen fuel cell is 5 kW. The control period T2 is one hour. A maximum output or a rated output of the storage battery apparatus 231 is 300 kW, and capacity of the storage battery apparatus 231 is 1,000 kWh. **In** the operation mode of the control apparatus 10 in the present embodiment, the correction value used in the correction of the generated power FC of the fuel cell power generation apparatus 221 is 50 kW.

As described above, in the present embodiment, the output of the fuel cell system b is planned in such a way as to make up a difference between the power demand and the output of the solar power generation system a. Here, at least one of the first correction or the second correction is performed on the plan. **In** the first correction, if the charge level of the storage battery system c is higher than or equal to the upper limit value smaller than 100%, the plan is corrected in such a way as to reduce the output of the fuel cell system b. **In** the second correction, if the charge level of the storage battery system c is lower than or equal to the lower limit value larger than 0%, the plan is corrected in such a way as to increase the output of the fuel cell system b.

As a result, when the first correction is performed, the storage battery system c can be discharged in such a way as to make up a shortfall in power caused with respect to the power demand due to a decrease in the output of the fuel cell system b. Consequently, a possibility that the storage battery system c enters a fully charged state and excess power of the solar power generation system a reversely flows to the power grid 100, for example, is reduced. In addition, when the second correction is performed, power discharged from the storage battery system c is reduced due to an increase in the output of the fuel cell system b. Consequently, a possibility that the storage battery system c enters a fully discharged state and power is purchased from the power grid 100, for example, is reduced. In addition, since a possibility that the storage battery system c is fully charged or fully discharged is reduced, life of the storage batteries is likely to be extended.

When the storage battery system c includes a plurality of storage battery units, the charge level of the storage battery system c may be an average or a median of charge levels of the plurality of storage battery units. The power demand and the output of the solar power generation system a may be actual values or predicted values. When the power demand and the output of the solar power generation system a are actual values, the charge level of the storage battery system c may be a charge level at a planning time of the output of the storage battery system c. When the power demand and the output of the solar power generation system a are predicted values, the charge level of the storage battery system c, too, may be a predicted value. That is, the power consumption D and the generated power PV are actual values stored in the database 20, but may be predicted values, instead. When the power consumption D and the generated power PV are predicted values, the storage battery SOC used to correct the plan may be a predicted value, instead of an actual value stored in the database 20.

In addition, in the present embodiment, in the present embodiment, the output of the fuel cell system b in the second period, which is the control period T2, later than the first period, which is the sampling period T1, is planned in such a way as to make up differences between actual values of the power demand and actual values of the output of the solar power generation system a in the first period. Furthermore, if the sum of the output of the solar power generation system a and the output of the fuel cell system b is larger than the power demand in the second period while the fuel cell system b is generating power with the planned output, the storage battery system c stores power. If the sum of the output of the solar power generation system a and the output of the fuel cell system b is smaller than the power demand in the second period while the fuel cell system b is generating power with the planned output, on the other hand, the storage battery system c discharges power in such a way as to meet the power demand.

As a result, compared to when the output of the storage battery system c is planned in such a way as to make up differences between actual values of the power demand and actual values of the output of the solar power generation system a in the first period, which is the sampling period T1, more power from the power system 200 can be used to meet the power demand. This is based on a fact that the storage battery system c is superior to the fuel cell system b in terms of load following capability while the fuel cell system b has larger power storage capacity than the storage battery system c. On the basis of this fact, in the present embodiment, the fuel cell system b makes up differences between the power demand and the amount of solar power generated in the second period, which is the control period T2, as planned as a base power supply, and the storage battery system c, which has excellent load-following capability, is also used to make up temporary differences that cannot be made up by the fuel cell system b. As a result, the fuel cell system b and the storage battery system c complement each other's weaknesses with strengths thereof, and more power from the power system 200 can be used to meet the power demand of the load. That is, according to the present embodiment, power purchased from the power grid 100 to meet the power demand of the load is reduced.

In addition, in the present embodiment, actual values in a short period such as the sampling period T1 are used to plan the output of the fuel cell power generation apparatus 221 in a following long period such as the control period T2 as illustrated in Fig. 2.

As a result, deviation of the output of the fuel cell system from differences between the power demand of the load and the output of the solar power generation system a in the second period can be inhibited compared to when the output of the fuel cell system in the second period is planned using actual values in a first period longer than the second period. This is because the output of the fuel cell system b is planned in consideration of only actual values in a period closer to the second period than when the output of the fuel cell system b in the second period is planned using actual values in a first period longer than the second period. Furthermore, since the output of the fuel cell power generation apparatus 221 in the long period is kept constant, deterioration of the fuel cell power generation apparatus 221 can be further suppressed.

In addition, since a median of differences is used in the present embodiment as in step S12 in Fig. 6, the output of the fuel cell power generation apparatus 221 can appropriately make up differences between the power demand and the output of the solar power generation apparatus 211 in the second period when actual values in the first period remain the same in the second period. As a result, charging and discharging of the storage battery apparatus 231 can be inhibited.

**In** addition, in the present embodiment, even when an average of differences is used in step S12 in Fig. 6 instead of a median of differences, the output of the fuel cell power generation apparatus 221 can appropriately make up differences between the power demand and the output of the solar power generation apparatus 211 in the second period. As a result, charging and discharging of the storage battery apparatus 231 can be inhibited.

Although a method for operating the power system 200 and the control apparatus 10 in the present disclosure have been described on the basis of the above embodiment, the present disclosure is not limited to the embodiment. The present disclosure may also include modes obtained by modifying the above embodiment in various ways conceivable by those skilled in the art, insofar as the spirit of the present disclosure is not deviated from.

For example, although the control apparatus 10 communicates with the database 20, the power system 200, and the fourth wattmeter 303 through the communication lines in the above embodiment, the communication is not limited to wired communication and may be wireless communication, instead. The wireless communication may be achieved by Wi-Fi (registered trademark), Bluetooth (registered trademark), ZigBee (registered trademark), or specified low-power radio transmission.

In the present embodiment, each component may be achieved by dedicated hardware or by executing a software program that suits the component. Each component may be achieved by reading and executing a software program stored in a storage medium, such as a hard disk or a semiconductor memory, using a program execution unit, such as a CPU or a processor. Here, software for achieving the control apparatus 10, the power system 200, and the like in the above embodiment is a computer program that causes the computer to perform the steps of the flowchart of each of Figs. 5 to 8.

The present disclosure also includes the following cases.

(1) The at least one apparatus is specifically a computer system including a microprocessor, a ROM, a RAM, a hard disk unit, a display unit, a keyboard, a mouse, and the like. The RAM or the hard disk unit stores a computer program. When the microprocessor operates in accordance with the computer program, the at least one apparatus achieves functions thereof. Here, the computer program is obtained by combining together a plurality of instruction codes indicating commands to the computer in order to achieve certain functions.
(2) A subset or all of the components included in the at least one apparatus may be achieved by a single system LSI (large scale integration). The system LSI is an ultra-multifunctional LSI fabricated by integrating a plurality of components on a single chip, and is specifically a computer system including a microprocessor, a ROM, a RAM, and the like. The RAM stores a computer program. When the microprocessor operates in accordance with the computer program, the system LSI achieves functions thereof.
(3) A subset or all of the components included in the at least one apparatus may be achieved by an IC card or a separate module removably attached to the apparatus. The IC card or the module is a computer system including a microprocessor, a ROM, a RAM, or the like. The IC card or the module may include the above ultra-multifunctional LSI. When the microprocessor operates in accordance with a computer program, the IC card or the module achieves functions thereof. The IC card or the module may be tamper-resistant.
(4) The present disclosure may be the above-described methods. The present disclosure may be a computer program for achieving these methods using a computer, or a digital signal including the computer program.

In addition, the present disclosure may be a computer program or a digital signal stored in a computer-readable storage medium, such as a flexible disk, a hard disk, a CD (compact disc)-ROM, a DVD, a DVD-ROM, a DVD-RAM, a BD (Blu-ray (registered trademark) disc), or a semiconductor memory. The present disclosure may be the digital signal stored in one of these storage media.

In addition, the present disclosure may be a computer program or a digital signal transmitted over an electrical communication network, a wireless or wired communication network, a network typified by the Internet, datacasting, or the like.

In addition, the present disclosure may be implemented by another independent computer system after transporting a program or a digital signal stored in a storage medium or transporting a program or a digital signal over a network or the like.

### Industrial Applicability

The method for operating a power system in the present disclosure can be employed, for example, for an apparatus or a system that controls a solar power generation system, a fuel cell system, a storage battery system, and the like.

### Reference Signs List

10 control apparatus
11 data obtaining unit
12 fuel cell output calculation unit
13 storage battery output calculation unit
20 database
100 power grid
200 power system
210 first controller
211 solar power generation apparatus
212 first PCS
213 first wattmeter
220 second controller
221 fuel cell power generation apparatus
222 second PCS
223 second wattmeter
230 third controller
231 storage battery apparatus
232 third PCS
233 third wattmeter
301 load
303 fourth wattmeter
a solar power generation system
b fuel cell system
c storage battery system
T1 sampling period (first period)
T2 control period (second period)

## Claims

1. A method for operating a power system, the method comprising the step of:
planning an output of a fuel cell system in such a way as to make up a difference between power demand and an output of a solar power generation system,
wherein, in the step, if a charge level of a storage battery system is higher than or equal to an upper limit value smaller than 100%, first correction, in which the plan is corrected in such a way as to reduce the output of the fuel cell system, is performed and/or if the charge level of the storage battery system is lower than or equal to a lower limit value larger than 0%, second correction, in which the plan is corrected in such a way as to increase the output of the fuel cell system, is performed.

2. A control apparatus for a power system, the control apparatus comprising:
a memory storing power demand and an output of a solar power generation system; and
a controller that, when planning an output of a fuel cell system in such a way as to make up a difference between the power demand and the output of the solar power generation system, performs, if a charge level of a storage battery system is higher than or equal to an upper limit value smaller than 100%, first correction, in which the plan is corrected in such a way as to reduce the output of the fuel cell system, and/or performs, if the charge level of the storage battery system is lower than or equal to a lower limit value larger than 0%, second correction, in which the plan is corrected in such a way as to increase the output of the fuel battery system.
